Europäisches Patentamt

European Patent Office

Office européen des brevets

(11) Publication number: **0 104 932**
**B1**

(12) **EUROPEAN PATENT SPECIFICATION**

(45) Date of publication of patent specification: **27.12.90**

(21) Application number: **83305757.3**

(22) Date of filing: **27.09.83**

(51) Int. Cl.⁵: **G 01 J 9/02, G 01 D 5/26**

(54) Polarization-maintaining fiber system and method of manufacturing the same.

(30) Priority: **27.09.82 JP 167946/82**
**27.09.82 JP 167947/82**
**27.09.82 JP 167948/82**

(43) Date of publication of application:
**04.04.84 Bulletin 84/14**

(45) Publication of the grant of the patent:
**27.12.90 Bulletin 90/52**

(84) Designated Contracting States:
**DE FR GB**

(56) References cited:
**DE-A-3 031 961**
**DE-A-3 039 235**
**GB-A-1 544 483**

**IEEE TRANSACTIONS ON MICROWAVE THEORY AND TECHNIQUES, vol. MTT-30, no. 4, April 1982, pages 472-511, New York, US; T.G. GIALLORENZI et al.: "Optical fiber sensor technology"**

(73) Proprietor: **AGENCY OF INDUSTRIAL SCIENCE AND TECHNOLOGY**
**3-1, 1-chome, Kasumigaseki**
**Chiyoda-ku Tokyo (JP)**

(73) Proprietor: **HOYA CORPORATION**
**13-12, 1-chome, Nishi-shinjuku**
**Shinjuku-ku Tokyo (JP)**

(72) Inventor: **Yoshimasa, Fujii Fujimi-sou No. H**
**10-21, Midorigaoka 5-chome Hamura-cho**
**Nishitama-gun Tokyo (JP)**
Inventor: **Yoshinobu, Mitsuhashi**
**2-824-10, Sakuramura Azuma Niihari-gun**
**Ibaraki-ken (JP)**
Inventor: **Osamu, Koike c/o Hoya Corporation**
**13-12, Ichome Nishi-shinjuku**
**Shinjuku-ku Tokyo (JP)**

(74) Representative: **Pritchard, Colin Hubert et al**
**Mathys & Squire 10 Fleet Street**
**London EC4Y 1AY (GB)**

Courier Press, Leamington Spa, England.

# Description

This invention relates to an optical fibre system including a polarization-maintaining birefringent fibre, to a method of manufacturing the optical fibre system, to the use of an optical fibre system as an optical sensor for sensing a variable physical parameter, and to an optical sensor for sensing a variable physical parameter of an object.

It should be noted that the polarization-maintaining fibres referred to throughout the instant specification have two planes which are orthogonal to each other and within which the refractive index has a maximum and a minimum valve, respectively. The fibre can propagate polarized light without substantial interference along both planes. Such a polarization-maintaining fibre is called a birefringent fibre because it has birefringence induced by an internal stress or anisotropic structure.

A conventional optical fibre system of the type described above is used in an interferometer, namely, an optical sensor for measuring or sensing a variable physical parameter, such as temperature, pressure, magnetic field, or the like, by making use of the interference between two light beams. Such an interferometer is disclosed in IEEE Transactions, Vol. MTT-30, No. 4 and has a simple structure because two light beams can be transmitted through a single polarization-maintaining fibre. More specifically, the polarization-maintaining fibre has a guide portion for guiding the light beams without any interference and a sensing portion for sensing a variable physical parameter, as will later be described with reference to one figure of the accompanying drawings. Both light beams are individually subjected to phase shifts during passage through the sensing portion. It is possible to measure a variation of the physical parameter by monitoring the phase shifts.

The interferometer is, however, disadvantageous in that both light beams are also subjected to phase shifts in the guide portion of the fibre when there is a disturbance or noise is generated in that portion. Such noise becomes serious with longer guide portions. Accordingly, it is difficult with the interferometer to precisely measure the variation of the physical parameter.

DE-A-3.031.961 discloses an interferometer wherein a beam of light is split into a measuring beam and a reference beam by a beam splitter. The measuring beam traverses a measuring optical fibre, whose length is influenced by a physical parameter under measurement, is reflected by a metal coating at the remote end of the measuring optical fibre, and returns via the measuring optical fibre to the beam splitter. The reference beam traverses a reference optical fibre, is reflected by a metal coating at the remote end of the reference fibre, and returns to the beam splitter via the reference fibre. The physical parameter is then determined from interference signals derived from the two reflected beams.

It is preferable that such an optical fibre system can be used for a wide variety of uses.

It is an object of this invention to provide an optical fibre system which includes a polarization-maintaining fibre and which has wide applications.

It is another object of this invention to provide a method which enables simple manufacture of an optical fibre system of the type described.

It is a further object of this invention to provide the use of an optical fibre system as optical sensor which sensor is not influenced by noises generated in a guide portion of the optical fibre system.

It is yet a further object of this invention to provide an optical sensor of the type described, which can detect a variation in a physical parameter with high precision.

It is another object of this invention to provide an optical sensor of the type described, which can be remotely controlled by the use of a long guide portion.

These objects are achieved by the features of the claims.

The invention will now be described, by way of example, with reference to the accompanying drawings, in which:

Fig. 1 shows a block diagram of a conventional optical sensor;

Fig. 2 is a sketch for use in describing operation of the optical sensor illustrated in Fig. 1;

Fig. 3 is a block diagram of an optical sensor according to a first embodiment of this invention;

Fig. 4 depicted above Fig. 3, is a sketch for use in describing operation of the optical sensor illustrated in Fig. 3;

Fig. 5 is a block diagram of an optical sensor according to a second embodiment of this invention;

Fig. 6 is a schematic perspective view of an optical fibre system for use in the optical sensor illustrated in Figs. 3 and 5;

Fig. 7 is a schematic axial sectional view used in describing a method of manufacturing the optical fibre system illustrated in Fig. 6; and

Fig. 8 is a schematic axial sectional view used in describing another method of manufacturing the optical fibre system illustrated in Fig. 6.

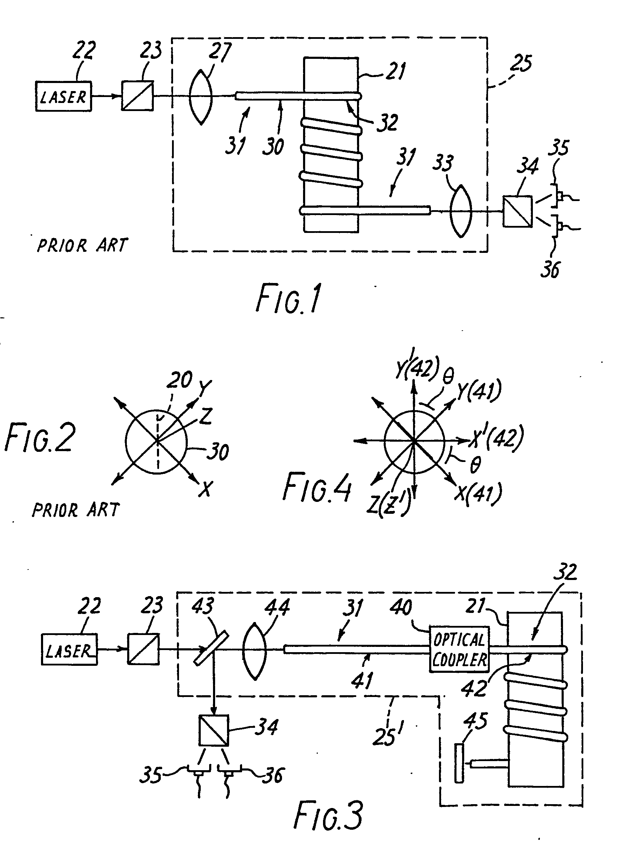

Referring to Fig. 1, a conventional optical sensor may be called a birefringent interferometer and is for use in combination with an object to measure a variable physical parameter, such as temperature. In Fig. 1, the object is exemplified by a cylinder, namely, a bobbin 21 of metal having a predetermined coefficient of thermal expansion. The optical sensor comprises a laser 22, such as a He-Ne laser, for emitting a laser beam and a polarizer 23 for polarizing the laser beam into a linearly polarized beam having a predetermined plane of polarization.

The illustrated optical sensor comprises an optical fibre system 25 including an incoming optical system 27, represented by a convex lens, and a single polarization-maintaining fibre 30 having a coefficient of thermal expansion lower than that of the bobbin 21.

Temporarily referring to Fig. 2, the polarization-maintaining fibre 30 has a longitudinal axis Z, a first plane containing the Z axis and the X axis, which is a first coordinate axis of birefringence and is specified by X-Z in Fig. 2, and a second plane containing the Z axis and the Y axis, which is a second coordinate axis of birefringence and is specified by Y-Z. The first plane X-Z is orthogonal to the second plane Y-Z so that orthogonal coordinates X-Y are defined in cross-section.

Referring to Fig. 1, an incoming light beam which is linearly polarized is incident upon a left-hand side, namely, an incident end, of the polarization-maintaining fibre 30. The plane of polarization of the incoming light beam is inclined at 45° to both of the first and the second planes, as depicted by a dotted line 20 in Fig. 2. As a result, the incoming light beam is divided into first and second components which are transmitted along the first and the second planes X-Z and Y-Z, respectively. It is known in the art that the polarization-maintaining fibre 30 has first and second propagation constants along the first and the second planes, respectively, and that the difference $\triangle\beta$ between these propagation constants is very large. As a result, the first and the second components are transmitted through the fibre 30 independently of each other.

In Fig. 1, the polarization-maintaining fibre 30 has a sensing portion 32 wound around the bobbin 21 for sensing the temperature and remaining portions 31 which are continuations of the sensing portion 32. These remaining portions 31 may be referred to as guide portions for guiding the first and second components to and from the sensing portion 32.

Let the temperature of the bobbin 21 be varied during transmission of the first and the second components of the light beam. Under these circumstances, the first and the second components are subjected to individual phase shifts in accordance with the variation of temperature and are supplied through a right-hand or outgoing end of the fibre 30 to an outgoing optical system 33, represented by a convex lens. The first and the second components are applied to an analyser 34, such as a Wollaston polarizing prism. The prism 34 is oriented so that the principal axes of the prism 34 are inclined at 45° to the orthogonal coordinate axes X-Y. Accordingly, the first and the second components are combined by the prism 34 on each principal axis to produce a pair of outgoing light beams having intensities represented by sine and cosine waves dependent on the phase shifts. A pair of photo detectors 35 and 36 detect the intensities of the outgoing light beams to produce output signals representative of the intensities, respectively. The output signals are processed by a computer (not shown) to detect the variation in temperature represented by the intensities. A combination of the analyzer 34 and the photo detectors 35 and 36 is operable to receive the outgoing light beam.

With this structure, both first and second components of the light beam are allowed to pass through the guide portion as well as the sensing portion. Disturbance or perturbation often takes place in the guide portion. Such disturbance also gives rise to phase shifts of the first and the second components and becomes serious as the guide portion is lengthened, as pointed out in the preamble to the instant specification. This means that objectionable phase shifts are superposed on the phase shifts to be measured by the optical sensor. Therefore, the illustrated sensor has a low minimum sensitivity.

Referring to Fig. 3, which is an optical sensor according to a first embodiment of this invention, similar parts are designated by like reference numerals to those in Fig. 1. The illustrated optical sensor comprises an optical fibre system 25' different from that illustrated in Fig. 1. The optical fibre system 25' comprises a guide portion 31 and a sensing portion 32 wound around a bobbin 21, as is the case with Fig. 1. It is, however, to be noted that the guide portion 31 is coupled to the sensing portion 32 through an optical coupler 40 in a manner to be described later.

Referring to Fig. 4 together with Fig. 3, the guide portion 31 comprises a first polarization-maintaining fibre 41 having a first longitudinal axis Z, a first plane defined by an X-Z plane, and a second plane defined by a Y-Z plane and orthogonal to the first plane, as in the polarization-maintaining fibre 30 illustrated in Fig. 1. Orthogonal coordinate axes (X-Y) are defined in cross-section, as illustrated in Fig. 4. The first polarization-maintaining fibre 41 further has a first end directed to the left, as viewed in Fig. 3, and a second end coupled to the optical coupler 40 and opposed to the first end.

The sensing portion 32 comprises a second polarization-maintaining fibre 42 wound around the bobbin 21. The second polarization-maintaining fibre 42 has a second longitudinal axis indicated at Z'. The second polarization-maintaining fibre 42 has a third plane of polarization along the second longitudinal axis and a fourth plane of polarization orthogonal to the third plane to define second orthogonal coordinate axes X'-Y' in cross-section. Let the third and the fourth planes be defined by an X'-Z' plane and a Y'-Z' plane, respectively. The second polarization-maintaining fibre 32 has third and fourth ends depicted at respective upper and lower portions of Fig. 3. The third end is coupled to the optical coupler 40.

As readily understood from Fig. 4, the optical coupler 40 is for coupling the first polarization-maintaining fibre 41 to the second polarization-maintaining fibre 42 with the first longitudinal axis Z matched to the second longitudinal axis Z' and with the first orthogonal coordinate axes X-Y azimuthally displaced from the second orthogonal coordinate axes X'-Y' by a predetermined angle θ. It is assumed that the predetermined angle θ is between 0° and 90°, both exclusive, and is substantially equal to 45° by way of example.

Needless to say, each of the first and the second polarization-maintaining fibres 41 and 42 has the same physical properties as the polarization-maintaining fibre 30 illustrated in Fig. 1. Let the difference $\triangle\beta$ between the two propagation constants of the first polarization-maintaining fibre 41 be equal to that between the two propagation constants of the second polarization-maintaining fibre 42.

In Fig. 3, the optical fibre system 25' further comprises a beam splitter 43 and a convex lens 44, both of which are adjacent to the first end of the first polarization-maintaining fibre 41. A reflector or mirror 45 is placed in the proximity of the fourth end of the second polarization-maintaining fibre 42.

With this structure, the polarizer 23, which is supplied with a laser beam from the laser 22, is so oriented as to produce a linearly polarized beam having a plane of polarization matched with either the first or second plane of the first polarization-maintaining fibre 41. The linearly polarized beam is transmitted along the first longitudinal axis and then along the second longitudinal axis, which is matched with the first longitudinal axis. It is assumed that the plane of polarization of the linearly polarized beam is matched with the first plane X-Z, as suggested by a thick line in Fig. 4. The linearly polarized beam is applied as an incoming light beam through the beam splitter 43 and the convex lens 44 to the first end to the fibre 41. The incoming light beam travels through the first polarization-maintaining fibre 41 to the optical coupler 40 with its plane of polarization remaining substantially unchanged.

Thus, the incoming light beam has a single plane of polarization while it passes through the first polarization-maintaining fibre 41. Therefore, the individual phase shifts described above in conjunction with Fig. 1 do not occur even when a disturbance is imposed up on the beam.

Upon reaching the optical coupler 40 the incoming light beam is divided into first and second components which are orthogonal to each other and which lie in the third plane X'-Z' and the fourth plane Y'-Z', respectively. The first and the second components are transmitted through the second polarization-maintaining fibre 42 to the fourth end of the fibre, with the planes of polarization of the components remaining substantially unchanged. The first and the second components are subjected to individual phase shifts dependent on the variation of temperature.

The first and the second components emerging from the fourth end of the fibre 42 are reflected by the mirror 45 and returned as a reflected light beam to the optical coupler 40 through the second polarization-maintaining fibre 42 and the fourth end thereof. The reflected light beam is again subjected to phase shifts in the second polarization-maintaining fibre 42. The first and the second components of the reflected light beam are combined with each other by the optical coupler 40, which rotates the orthogonal coordinate axes from the second (X'-Y') coordinate axes to the first (X-Y) coordinate axes. As a result, the reflected light beam has first and second rotated components which lie in the first and second planes X-Z and Y-Z, respectively.

The reflected light beam is emitted from the first end of the first polarization-maintaining fibre 41 and is applied through the convex lens 45 and the beam splitter 43 to a receiving section as an outgoing light beam.

The receiving section comprises an analyzer 34, such as a Wollaston polarizing prism, as is the case with Fig. 1. It is, however, to be noted that the illustrated analyzer 34 is oriented so that the principal axes of the analyzer 34 are matched to the first and the second planes of the first polarization-maintaining fibre 41. Accordingly, the outgoing light beam is separated by the analyzer 34 into the first and second output components resulting from the first and the second rotated components, respectively. The first and the second converted components are supplied to the first and the second photo detectors 35 and 36 in the manner described in conjunction with Fig. 1. Thus, first and second photo detectors 35 and 36 produce respective first and second output signals representative of the intensities of the first and the second rotated components, respectively, which are dependent on the variation in temperature. It is, therefore, possible to measure the variation of the temperature by monitoring the first and the second output signals. Thus, the first and the second photo detectors 35 and 36 individually detect the first and the second rotated components travelling along the first and the second planes of the first polarization-maintaining fibre 41, respectively. From this fact, it is readily understood that the first and the second output signals are not adversely affected by any phase shifts which result from any inter-correlation between the first and the second rotated components, even when a disturbance is imposed on the first and the second rotated components in the guide portion.

Although the mirror 45 is placed in the proximity of the fourth end of the second polarization-maintaining fibre 42, the mirror 45 may be replaced by a dielectric layer, a gold layer, a silver layer, or an aluminum layer which is directly applied on the fourth end.

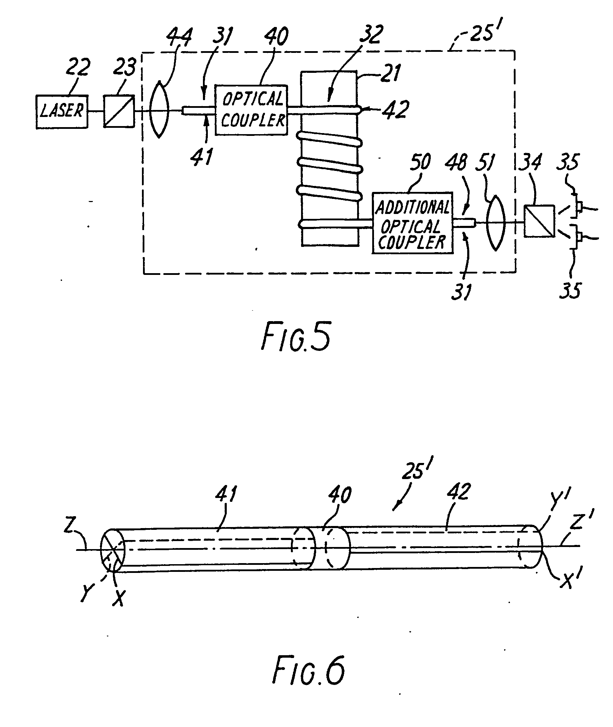

Referring to Fig. 5, an optical sensor according to a second embodiment of this invention comprises similar parts designated by like reference numerals to those in Fig. 3 and effects a unidirectional transmission of a light beam. In this connection, the beam splitter 43 and the mirror 45 of Fig. 3 are not present in Fig. 5. In Fig. 5, the optical fibre system 25' comprises a third polarization-maintaining fibre 48 which serves as the guide portion 31 in conjunction with the first polarization-maintaining fibre 41. The third polarization-maintaining fibre 48 has a third longitudinal axis extended along the second longitudinal axis and fifth and sixth ends which are transverse to the third longitudinal axis and which are directed leftwards and rightwards, respectively, as viewed in Fig. 5. The third polarization-maintaining fibre 48 has a fifth plane of polarization along the third longitudinal axis and a sixth plane of polarization orthogonal to the fifth plane so as to define a third orthogonal coordinate in cross-section. It is assumed that the third polarization-maintaining fibre 48 has the same difference between its propagation constants as does each of the first and the second polarization-maintaining fibres 41 and 42.

An additional optical coupler 50 is placed between the fourth and the fifth ends. The additional optical coupler 50 couples the second and third polarization-maintaining fibres 42 and 48 so that the second longitudinal axis is matched to the third longitudinal axis and that the second orthogonal coordinate axis is angularly displaced from the third orthogonal coordinate axis by a preselected angle. The preselected angle may be between 0° and 90°, both exclusive. In the example illustrated, the preselected angle is equal to 45° and the third orthogonal coordinate axes are therefore matched with the first orthogonal coordinate axes X-Y.

The linearly polarized beam which has a plane of polarization lying in the first plane (X-Z) is incident as an incoming light beam onto the first end of the first polarization-maintaining fibre 41 via the convex lens 44. The incoming light beam is transmitted to the additional optical coupler 50 through the first polarization-maintaining fibre 41, the optical coupler 40, and the second polarization-maintaining fibre 42, in the manner described in conjunction with Fig. 3. Therefore, the incoming light beam is divided into first and the second components travelling along respective third and the fourth planes (X'-Z') and (Y'-Z') in the second polarization-maintaining fibre 42. Inasmuch as the additional optical coupler 50 serves to effect a change from the second orthogonal coordinates to the third coordinates, as mentioned before, the first and the second components are converted by the additional optical coupler 50 into first and second converted components travelling along the fifth and sixth planes, respectively. The first and the second converted components are sent through an outgoing optical system (represented by a convex lens 51) to the analyzer 34, such as a Wollaston polarizing prism, which is oriented so that the principal axes of the analyzer 34 are matched to the fifth and the sixth planes. Thus, the first and the second converted components are detected by the first and the second photo detectors 35 and 36, respectively, in the manner described in conjunction with Fig. 3. As a result, the first and the second photo detectors 35 and 36 produce first and the second output signals representative of the variation of temperature.

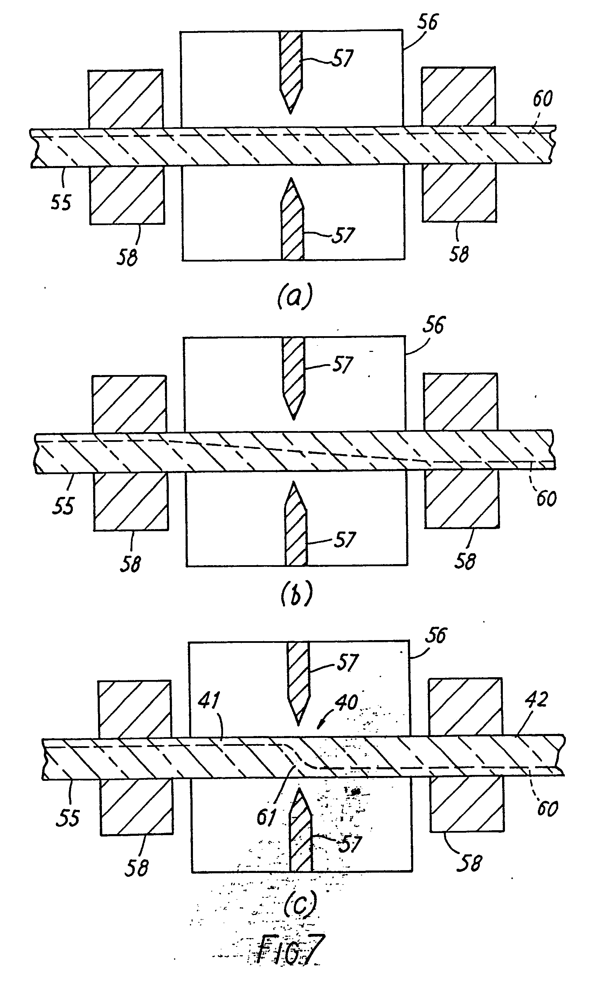

Referring to Fig. 6, an optical fibre system 25' which is suitable for use in the optical sensors of Figs. 3 and 5 comprises first and second polarization-maintaining fibres 41 and 42 similar to those illustrated in Figs. 3 and 5. For convenience of description, the first orthogonal coordinates of the first polarization-maintaining fibre 41 are shown as X-Y while the second orthogonal coordinates of the second polarization-maintaining fibre are shown as X'-Y', As in Figs. 3 and 5, the first polarization-maintaining fibre 41 has a first longitudinal axis Z, a first plane defined by X-Z, and a second plane defined by Y-Z. The first polarization-maintaining fibre 41 also has first and the second ends which are transverse to the first longitudinal axis and which are facing leftwards and rightwards, respectively, in Fig. 6. Similarly, the second polarization-maintaining fibre 42 has a second longitudinal axis Z', a third defined by X'-Z', and a fourth plane defined by Y'-Z'. The second polarization-maintaining fibre 42 also has third and fourth ends which are transverse to the second longitudinal axis Z' and which face leftwards and rightwards, respectively, in Fig. 6.

The difference between the propagation constants in the first polarization-maintaining fibre 41 is assumed to be equal to that in the second polarization-maintaining fibre 42.

The illustrated optical fibre system 25' includes an optical coupler 40 between the first and second polarization-maintaining fibres 41 and 42. More specifically, the optical coupler 40 is composed of a block directly contacting the second and third ends. Stated otherwise, the block forms a continuation of the first and second polarization-maintaining fibres 41 and 42. As a result, no gap is left between the block and the first polarization-maintaining fibre 41 or between the block and the second polarization-maintaining fibre 42. For convenience of description, let the block have first and second block ends which are brought into contact with the second and the third ends of the first and the second polarization-maintaining fibres 41 and 42, respectively. The block consists of the same material as the first and the second polarization-maintaining fibres 41 and 42. Preferably, the block is shorter than a beat length L defined by $2\pi/\triangle\beta$ where $\triangle\beta$ represents the difference between the propagation constants in each of the fibres 41 and 42. Such a block serves to avoid any noise and to keep each phase of the light beams stable.

As shown in Fig. 6, the block couples the first and the second polarization-maintaining fibres 41 and 42 with the first longitudinal axis Z matched to the second longitudinal axis Z' and with the first orthogonal coordinate axes X-Y angularly displaced from the second orthogonal coordinate axes X'-Y'. Such an angular difference may be between 0° and 90°, both exclusive, as mentioned in conjunction with Fig. 4.

By way of example, birefringent fibres with high internal lateral stress were used as the first and the second polarization-maintaining fibres 41 and 42. The birefringent fibres were of silica glass and had a fibre diameter of 125μm, a core diameter of 4μm, and a beat length L of 5 millimeters. The birefringent fibres were coupled together by an optical coupler 40 of 100μm long. In this event, the angular displacement was equal to 45°. Thus, the length of the optical coupler 40 was shorter than one tenth of the beat length L.

Referring to Fig. 7, a method of manufacturing the optical fibre system 25′ illustrated in Fig. 6 will now be described in order to provide a better understanding of this invention. In Fig. 7(a), a single-polarization-maintaining fibre 55 is prepared together with an electrical discharge apparatus 56 which comprises a housing and a pair of spark electrodes 57 fixed to the housing. The spark electrodes 57 are opposed to each other with a gap therebetween. The polarization-maintaining fibre 55 is introduced into the housing, interposed between the spark electrodes 57, and fastened to a pair of angular adjustment jigs 58. A broken line 60 indicates the intersection between the second plane Y—Z (illustrated in Fig. 6) and the surface of the polarization-maintaining fibre 55. As shown in Fig. 7(a), the intersection line 60 extends parallel with the longitudinal axis of the polarization-maintaining fibre 55 as long as the jigs 58 are not driven.

However, the polarization-maintaining fibre 55 is twisted by driving the jigs 58 so as to rotate the right-hand side of the fibre 55 relative to the left-hand side thereof. In the example illustrated, the right-hand side of the fibre is rotated by 45° relative to the left-hand side. As a result, the intersection line 60 is gradually and gently bent from an upper portion of the fibre 55 to a lower portion thereof, as shown in Fig. 7(b).

Thereafter, sparks are caused to occur several times between the spark electrodes 57, thereby locally fusing a portion of the polarization-maintaining fibre 55 intermediate the left-hand and the right-hand sides. Each spark lasts for a duration of 0.1 seconds, during which an electric current of 15 mA flows between the spark electrodes 57. Thus, the polarization-maintaining fibre 55 is locally fused at a portion 61 lying between the spark electrodes 57, as shown in Fig. 7(c). The portion 61 has a length of 100μm, which is shorter than the beat length L of 5 mm and serves as the optical coupler 40 illustrated in Fig. 3. When the polarization-maintaining fibre 55 is released from twisting force, the optical fibre system is completed and comprises the first and the second polarization-maintaining fibres 41 and 42 coupled together via the optical coupler 40. As readily understood from Fig. 7(c), the orthogonal coordinate axes are continuously changed in the optical coupler 40 from the first orthogonal coordinate axes to the second orthogonal coordinate axes.

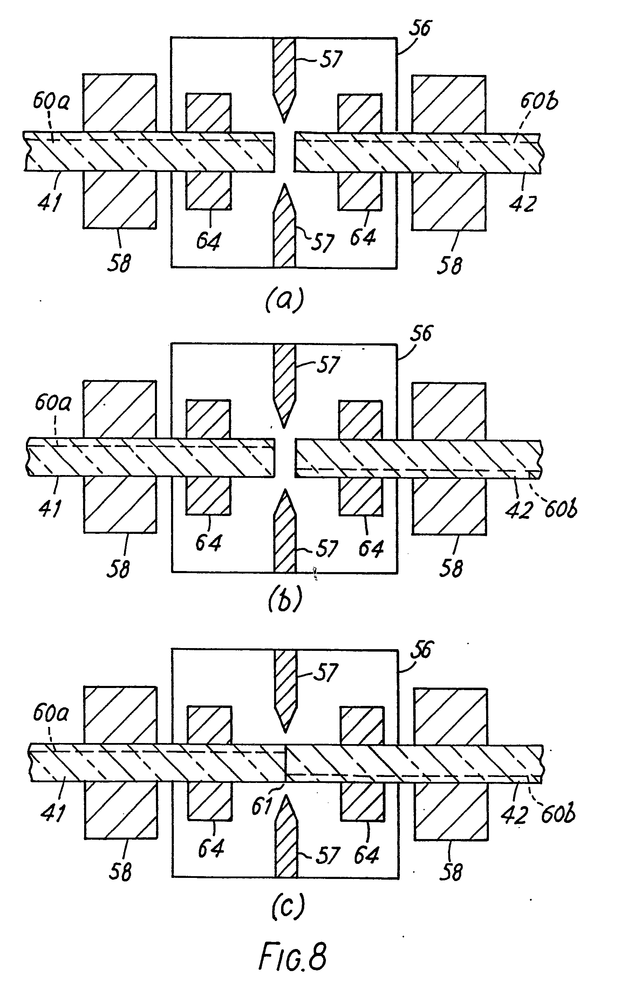

Referring to Fig. 8, another method of manufacturing the optical fibre system 25′ may be described as a splicing method. In this method, use is made of the first and the second polarization-maintaining fibres 41 and 42, both of which are spliced by means of an electrical discharge apparatus 56. The apparatus 56 is similar to that illustrated in Fig. 7 except that a pair of three axis adjustment jigs 64 are provided in the housing so as to allow adjustment along three axes of each of the first and the second polarization-maintaining fibres 41 and 42. In Fig. 8(a), the first and the second polarization-maintaining fibres 41 and 42 are set so that both of the intersection lines (depicted at 60a and 60b) are matched with each other along each longitudinal axis.

Under the circumstances, the first and the second polarization-maintaining fibres 41 and 42 are rotated relative to each other by the use of the angular adjustment jigs 58 so as to produce an angular displacement between the fibres 41 and 42 equal to 45°. As a result, the intersection line 60a of the first polarization-maintaining fibre 41 is offset from the intersection line 60b of the second polarization-maintaining fibre 42, as shown in Fig. 8(b).

Subsequently, an end portion of the first polarization-maintaining fibre 41 is brought into contact with an end portion of the second polarization-maintaining fibre 42 by the use of the adjustment jigs 64, as illustrated in Fig. 8(c). The spark electrodes 57 are energized to cause sparking to occur for a duration of 0.2 seconds. As a result, the first and the second polarization-maintaining fibres 41 and 42 are coupled together by fusing at a coupling portion 61.

With this method, the coupling portion 61 is very short in comparison with that illustrated in Fig. 7(c). In fact, the length of the coupling portion 61 may be substantially equal to zero. In this connection, the first orthogonal coordinate axes are directly coupled to the second orthogonal coordinate axes by the coupling portion 61. In this event, the ends of the first and the second polarization-maintaining fibres 41 and 42 may be regarded as contacting surfaces of the coupling portion 61. In this sense, the coupling portion 61 may be called an optical coupler.

Instead of the spark electrodes, a micro-torch or a laser beam may be used to fuse the fibres 41 and 42. A resistance heating technique may also be utilized. Alternatively, the first and the second polarization-maintaining fibres 41 and 42 are connected to each other by use of an adhesive.

While this invention has thus far been described in conjunction with a few embodiments thereof, it will readily be possible for those skilled in the art to put this invention into practice in various manners. For example, each of the first and the second polarization-maintaining fibres 41 and 42 may be an elliptical core fibre. The optical coupler 40 illustrated in Figs. 3 and 5 may be a space gap or an isotropic material. The optical sensor illustrated in Figs. 3 and 5 can be used to measure magnetic field or pressure. In this case, the bobbin 14 may be made of a magnetostrictive material or a resilient material having a coefficient of elasticity greater than that of the fibre 42. The difference between the propagation constants in each of the first to third polarization-maintaining fibres 41, 42 and 48 may be different from one another. Anyway, the length of the optical coupler 40 may be shorter than a maximum beat length determined by a minimum difference of propagation constants.

**Claims**

1. An optical fibre system (25') comprising
a first polarization-maintaining birefringent fibre (41),
a second polarization-maintaining birefringent fibre (42),
the said fibres being optically coupled to each other (40) so that a light beam travelling through the first fibre (41) and having a linear polarization which is matched to one of the coordinate axes of birefringence of the first fibre (41), is split into two polarization components matched to respective coordinate axes of birefringence of the second fibre (42), the coordinate axes of birefringence of the second fibre being azimuthally rotated by a predetermined angle with respect to the coordinate axes of the first fibre (41).

2. An optical fibre system as claimed in Claim 1, wherein said first and said second polarization-maintaining optical fibres (41, 42) have first and second differences between their propagation constants, respectively, and are specified by first and second beat lengths determined by the first and second differences of their propagation constants, respectively, wherein said coupling means (40) comprises:
a region (40) having a length shorter than each of said first and said second beat lengths for coupling said first and said second polarization-maintaining optical fibres (41, 42) without any gap between said block (40) and said first polarization-maintaining optical fibre (41) and between said block (40) and said second polarization-maintaining optical fibre (42).

3. An optical fibre system as claimed in Claim 2, wherein within said region (40) the internal orthogonal coordinate axes vary continuously so that said internal orthogonal coordinate axes are matched to said first and said second orthogonal coordinate axes of said first and said second fibres (41, 42), respectively.

4. An optical fibre system as claimed in Claim 3, wherein said predetermined angle is substantially equal to 45°.

5. Use of an optical fibre system (25') according to any one of Claims 1 to 4 as optical sensor for measuring a variable physical parameter of an object (21).

6. An optical sensor for measuring a variable physical parameter of an object (21) comprising an optical fibre system (25') according to any one of Claims 1 to 4, light source means (22, 23) for generating a linearly polarized light beam, said optical fibre system (25') having a guide portion (31) for guiding said light beam and a sensing portion (32) optically coupled to said guide portion (31) and arranged to be coupled to said object (21) for sensing said variable physical parameter, and receiving means (34, 35, 36) for receiving the light beam emitted from said optical fibre system and determining said variable physical parameter from said received light beam,
said guide portion (31) comprising said first polarization-maintaining fibre (41),
said sensing portion (32) comprising said second polarization-maintaining fibre (42) coupled to said first fibre (41).

7. An optical sensor as claimed in Claim 6, wherein said light source means (22, 23) comprises:
a laser (22) for producing a laser beam; and
a polarizer (23) for polarizing said laser beam into a linearly polarized beam having a plane of polarization matched to one of the coordinate axes of birefringence of the first fibre (41).

8. An optical sensor as claimed in Claim 7, further comprising:
a reflector (45) arranged adjacent to the end of the sensing portion (32) for reflecting the light beam back through the sensing portion to the receiving means (34, 35, 36); and
an optical system (43, 44) arranged adjacent to the guide portion (31) and optically coupled to said light source means (22, 23), said first polarization-maintaining fibre (41), and said receiving means (34, 35, 36).

9. An optical sensor as claimed in Claim 8, wherein said guide portion (31) is split into a first part (31) coupled (40) to the sensing portion (32) before the object (21), and into a second part (48) coupled (50) to the sensing portion (32) behind the object (21) and arranged before the receiving means (34, 35, 36).

10. An optical sensor as claimed in Claim 9, further comprising:
a first optical system (44) arranged adjacent to said first part of the guide portion (31); and
a second optical system (51) arranged adjacent to said second part (48) for delivering the light beam emitted from said second part to said receiving means (34, 35, 36).

11. A method of manufacturing the optical fibre system (25') according to Claim 1, comprising the steps of:
preparing a single polarization-maintaining birefringent fibre (55), said polarization-maintaining fibre (55) being divided along its longitudinal axis into a first portion (41), a second portion (42) spaced apart from said first portion, and an intermediate portion (40) between said first and second portions (41, 42);
fusing said single polarization-maintaining fibre at said intermediate portion (40); and
twisting said first portion (41) relative to said second portion (42) around said longitudinal axis to angularly rotate the first portion (41) relative to the second portion (42) by a prescribed angle between 0° and 90°.

12. A method of manufacturing the optical fibre system (25') according to Claim 1, comprising the steps of:
preparing first and second polarization-maintaining birefringent fibres (41,42) having first and second end portions, respectively;
adjusting said first longitudinal axis (Z) to said second longitudinal axis (Z') with said first and said second end portions opposed to each other;

rotating said first polarization-maintaining fibre (41) relative to said second polarization-maintaining fibre (42) around said first and said second longitudinal axes (Z, Z') by a preselected angle between 0° and 90°, both exclusive;

splicing said first and said second polarization-maintaining fibres (41, 42), with said first longitudinal axis (Z) matched to said second longitudinal axis (Z') and with said preselected angle kept unchanged, to bring said first end portion into contact with said second end portion to form a contact portion; and

fusing said contact portion to form said coupling means between said first and said second end portions.

**Patentansprüche**

1. Optisches Fasersystem (25') mit

einer ersten doppelbrechenden Faser (41) mit vorgegebener Polarisationsrichtung,

einer zweiten doppelbrechenden Faser (42) mit vorgegebener Polarisationsrichtung,

wobei die Fasern optisch miteinander gekoppelt sind (40), so daß ein Lichtstrahl, der durch die erste Faser (41) hindurchläuft und eine lineare Polarisation aufweist, die an eine der Koordinatenachsen der Doppelbrechung der ersten Faser (41) angepaßt ist, in zwei Polarisationskomponenten aufgespalten wird, die an entsprechende Koordinatenachsen der Doppelbrechung der zweiten Faser (42) angepaßt sind, wobei die Koordinatenachsen der Doppelbrechung der zweiten Faser um einen vorbestimmten Winkel bezüglich der Koordinatenachsen der ersten Faser (41) azimuthal gedreht werden.

2. Optisches Fasersystem nach Anspruch 1, wobei die erste und zweite optische Faser (41, 42) mit vorgegebener Polarisationsrichtung erste und zweite Unterschiede zwischen ihren Übertragungskonstanten aufweisen und durch erste und zweite Überlagerungslängen spezifiziert sind, die durch die ersten und zweiten Unterschiede ihrer Übertragungskonstanten bestimmt sind, wobei die Kopplungseinrichtung (40) aufweist:

einen Bereich (40) mit einer Länge, die kürzer als jede der ersten und zweiten Überlagerungslängen ist, um die erste und zweite optische Faser (41, 42) mit vorgegebener Polarisationsrichtung ohne Abstand zwischen dem Block (40) und der ersten optischen Faser (41) mit vorgegebener Polarisationsrichtung und zwischen dem Block (40) und der zweiten optischen Faser (42) mit vorgegebener Polarisationsrichtung anzukoppeln.

3. Optisches Fasersystem nach Anspruch 2, wobei innerhalb des Bereiches (40) die inneren orthogonalen Koordinatenachsen kontinuierlich variieren, so daß die innneren orthogonalen Koordinatenachsen an die erste und zweite orthogonale Koordinatenachse der ersten bzw. der zweiten Faser (41, 42) angepaßt werden.

4. Optisches Fasersystem nach Anspruch 3, wobei der vorbestimmte Winkel im wesentlichen gleich 45° ist.

5. Verwendung eines optischen Fasersystems (25') nach einem der Ansprüche 1 bis 4 als optischen Sensor, zum Messen eines variablen physikalischen Parameters eines Objekts (21).

6. Optischer Sensor zum Messen eines variablen physikalischen Parameters eines Objektes (21) mit einem optischen Fasersystem (25') entsprechend einem der Ansprüche 1 bis 4, einer Lichtquelleneinrichtung (22, 23) zum Erzeugen eines linear polarisierten Lichtstrahles, wobei das optische Fasersystem (25') einen Leiterabschnitt (31) zum Leiten des Lichtstrahls und einen Sensorabschnitt (32), der optisch an den Leiterabschnitt (31) angekoppelt ist und an das Objekt (21) ankoppelbar ist, um den variablen physikalischen Parameter abzutasten, und Empfangseinrichtungen (34, 35, 36) aufweist, um den Lichtstrahl, der vom optischen Fasersystem emittiert wurde, zu empfangen und den variablen physikalischen Parameter aus dem empfangenen Lichtstrahl zu bestimmen,

wobei der Leiterabschnitt (31) die erste Faser (41) mit vorgegebener Polarisationsrichtung aufweist, und

der Sensorteil (32) die zweite Faser (42) mit vorgegebener Polarisationsrichtung, die an die erste Faser (41) gekoppelt ist, aufweist.

7. Optischer Sensor nach Anspruch 6, wobei die Lichtquelleneinrichtung (22, 23) aufweist:

einen Laser (22) zum Erzeugen eines Laserstrahls; und

einen Polarisator (23) zum Polarisieren des Laserstrahls in einen linear polarisierten Strahl mit einer Polarisationsebene, die an eine der Koordinatenachsen der Doppelbrechung der ersten Faser (41) angepaßt ist.

8. Optischer Sensor nach Anspruch 7, der ferner aufweist:

einen Reflektor (45), der angrenzend an das Ende des Sensorteils (32) angeordnet ist, um den Lichtstrahl durch den Sensorabschnitt zu den Empfangseinrichtungen (34, 35, 36) zurück zu reflektieren; und

ein optisches System (43, 44), das angrenzend an den Leiterabschnitt (31) angeordnet ist und an die Lichtquelleneinrichtung (22, 23), die erste Faser (41) mit vorgegebener Polarisationsrichtung und die Empfangseinrichtungen (34, 35, 36) optisch angekoppelt ist.

9. Optischer Sensor nach Anspruch 8, wobei der Leiterabschnitt (31) in ein erstes Teil (31), das an den Sensorabschnitt (32) vor dem Objekt (21) angekoppelt ist (40), und in ein zweites Teil (48) unterteilt ist, das an den Sensorabschnitt (32) hinter dem Objekt (21) angekoppelt und vor den Empfangseinrichtungen (34, 35, 36) angeordnet ist.

10. Optischer Sensor nach Anspruch 9, der ferner aufweist:

ein erstes optisches System (44), das angrenzend an das erste Teil des Leiterabschnitts (31) angeordnet ist; und

ein zweites optisches System (51), das angrenzend an das zweite Teil (48) angeordnet ist, um den Lichtstrahl, der vom zweiten Teil emittiert wurde, zu den Empfangseinrichtungen (34, 35, 36) zu liefern.

11. Verfahren zum Herstellen des optischen Fasersystems (25') nach Anspruch 1 mit den Schritten:

Aufbereiten einer einzelnen doppelbrechenden Faser (55) mit vorgegebener Polarisationsrichtung, wobei die Faser (55) mit vorgegebener Polarisationsrichtung auf ihrer Längsachse in ein erstes Teil (41), ein davon beabstandetes zweites Teil (42) und ein Zwischenteil (40) zwischen dem ersten und zweiten Teil (41, 42) unterteilt wird;

Zusammenschmelzen der einzelnen Faser mit vorgegebener Polarisationsrichtung an dem Zwischenteil (40); und

Verdrehen des ersten Teils (41) relativ zum zweiten Teil (42) um die Längsachse, um das erste Teil (41) um einen vorgegebenen Winkel zwischen 0 und 90° relativ zum zweiten Teil (42) zu drehen.

12, Verfahren zum Herstellen des optischen Fasersystems (25') nach Anspruch 1 mit den Schritten:

Aufbereiten von ersten und zweiten doppelbrechenden Fasern (41, 42) mit vorgegebener Polarisationsrichtung, die erste bzw. zweite Endteile aufweisen;

Einstellen der ersten Längsachse (Z) zur zweiten Längsachse (Z'), wobei das erste und das zweite Endteil einander gegenüberstehen;

Drehen der ersten Faser (41) mit vorgegebener Polarisationsrichtung relativ zur zweiten Faser (42) mit vorgegebener Polarisationsrichtung um die erste und die zweite Längsachse (Z, Z') und einen vorgewählten Winkel zwischen 0 und 90°, die beide ausgeschlossen sind;

Zusammenfügen der ersten und zweiten Faser (41, 42) mit vorgegebener Polarisationsrichtung, wobei die erste Längsachse (Z) an die zweite Längsachse (Z') angepaßt ist und der vorgewählte Winkel unverändert gehalten wird, um das erste Endteil mit dem zweiten Endteil in Kontakt zu bringen, und ein Kontaktteil auszubilden; und

Zusammenschmelzen des Kontaktteils, um die Kopplungseinrichtung zwischen dem ersten und dem zweiten Endteil auszubilden.

**Revendications**

1. Système de fibres optiques (25') comprenant:

une première fibre biréfringente maintenant la polarisation (41),

une seconde fibre biréfringente maintenant la polarisation (42),

ces fibres étant couplées optiquement l'une à l'autre en (40) de façon qu'un faisceau de lumière passant dans la première fibre (41) et présentant une polarisation linéaire adaptée à l'un des axes de coordonnées de biréfringence de la première fibre (41), soit séparée en deux composantes de polarisation adaptées aux axes de coordonnées de biréfringence respectifs de la seconde fibre (42), les axes de cordonnées de biréfringence de la seconde fibre étant soumis à une rotation en azimut d'un angle prédéterminé par rapport aux axes de coordonnées de la première fibre (41).

2. Système de fibres optiques selon la revendication 1, caractérisé en ce que la première et seconde fibre optique maintenant la polarisation (41, 42) présentent respectivement une première et seconde différence entre leurs constantes de propagation, et sont spécifiées par une première et seconde longueur de battement déterminées respectivement par la première et seconde différence de leurs constantes de propagation, et en ce que les moyens d'accouplement (40) comprennent:

une zone (40) présentant une longueur plus courte que chacune de la première et seconde longueur de battement pour coupler la première et seconde fibre optique maintenant la polarisation (41, 42) sans le moindre intervalle entre le bloc (40) et la première fibre optique maintenant la polarisation (41) et entre le bloc (40) et la seconde fibre optique maintenant la polarisation (42).

3. Système de fibres optiques selon la revendication 2, caractérisé en ce que dans la zone (40), les axes de coordonnées orthogonaux internes varient de façon continue pour que ces axes de coordonnées orthogonaux internes soient adaptés respectivement au premier et second axe de coordonnées orthogonaux de la première et seconde fibress (41, 42).

4. Système de fibres optiques selon la revendication 3, caractérisé en ce que l'angle prédéterminé est sensiblement égal à 45°C.

5. Utilisation d'un système de fibres optiques (25') selon l'une quelconque des revendications 1 à 4, comme détecteur optique pour mesurer un paramètres physiques variable d'un objet (21).

6. Détecteur optique pour mesurer un paramètre physique variable d'un objet (21), détecteur caractérisé en ce qu'il comprend un système de fibres optiques (25') selon l'une quelconque des revendications 1 à 4, des moyens de source de lumière (22, 23) pour générer un faisceau de lumière polarisé linéairement, le système de fibres optiques (25') comportant une partie de guidage (31) pour guider le faisceau de lumière, et une partie de détection (32) couplée optiquement à la partie de guidage (31) et disposée de manière à être couplée à l'objet (21) pour détecter le paramètre physique variable, et des moyens de réception (34, 35, 36) pour recevoir le faisceau de lumière émis par le système de fibres optiques, et pour déterminer le paramètre physique variable à partir du faisceau de lumière, reçu,

la partie de guidage (31) comprenant la première fibre maintenant la polarisation (41),

la partie de détection (32) comprenant la seconde fibre maintenant la polarisation (42) couplée à la première fibre (41).

7. Détecteur optique selon la revendication 6, caractérisé en ce que les moyens de source de lumière (22, 23) comprennent:

un laser (22) pour produire un faisceau laser; et un polariseur (23) pour polariser ce faisceau laser de manière à former un faisceau polarisé linéairement présentant un plan de polarisation adapté à l'un des axes de coordonnées de biréfringence de la première fibre (41).

8. Détecteur optique selon la revendication 7, caractérisé en ce qu'il comprend en outre:

un réflecteur (45) placé au voisinage de l'extrémité de la partie de détection (32) pour réfléchir le faisceau de lumière en le renvoyant par la partie de détection vers les moyens de réception (34, 35, 46); et

un système optique (43, 44) placé au voisinage de la partie de guidage (31) et couplé optiquement aux moyens de source de lumière (22, 23), à la première fibre maintenant la polarisation (41), et aux moyens de réception (34, 35, 36).

9. Détecteur optique selon la revendication 8, caractérisé en ce que la partie de guidage (31) est séparée en une première partie (31) couplée en (40) à la partie de détection (32) avant l'objet (21), et une seconde partie (48) couplée en (50) à la partie de détection (32) derrière l'objet (21) et disposée avant les moyens de réception (34, 35, 36).

10. Détecteur optique selon la revendication 9, caractérisé en ce qu'il comprend en outre:

un premier système optique (44) disposé au voisinage de la première partie de la partie de guidage (31); et

un second système optique (51) disposé au voisinage de la seconde partie (48) pour fournir aux moyens de réception (34, 35, 36) le faisceau de lumière émis par la seconde partie.

11. Méthode de fabrication du système de fibres optiques (25') selon la revendication 1, méthode caractérisée en ce qu'elle comprend les différentes étapes consistant à:

préparer une fibre biréfringente unique maintenant la polarisation (55), cette fibre maintenant la polarisation (55) étant divisée, suivant son axe longitudinal, en une première partie (41), une seconde partie (42) espacée de la première partie, et une partie intermédiaire (40) située entre la première et seconde partie (41, 42);

faire fondre la fibre unique maintenant la polarisation à l'endroit de la partie intermédiaire (40); et

tordre la première partie (41) par rapport à la seconde partie (42) autour de l'axe longitudinal pour faire tourner angulairement la première partie (41) par rapport à la seconde partie (42) d'un angle prédéterminé compris entre 0° et 90°.

12. Méthode de fabrication du système de fibres optiques (25') selon la revendication 1, méthode caractérisée en ce qu'elle comprend les différentes étapes consistant à:

préparer une première et une seconde fibre biréfringente maintenant la polarisation (41), 42) comportant respectivement la première et seconde partie d'extrémité;

régler le premier axe longitudinal (Z) par rapport au second axe longitudinal (Z') de façon que la première et seconde partie d'extrémité soient opposés l'une à l'autre;

faire tourner la première fibre maintenant la polarisation (41) par rapport à la seconde fibre maintenant la polarisation (42) sur le premier et second axe longitudinal (Z, Z') d'un angle prédéterminé compris entre 0° et 90° sans atteindre ces deux valeurs;

raccorder la première et seconde fibress maintenant la polarisation (41, 42) de façon que le premier axe longitudinal (Z) soit adapté au second axe longitudinal (Z'), et de façon que l'angle prédéterminé soit maintenu inchangé, de manière à amener la première partie d'extrémité en contact avec la seconde partie d'extrémité pour former une partie de contact; et

faire fondre la partie de contact pour former les moyens d'accouplement entre la première et seconde partie d'extrémité.

FIG.1

PRIOR ART

FIG.2

PRIOR ART

FIG.4

FIG.3

Fig.5

Fig.6

(a)

(b)

(c)

FIG 7

(a)

(b)

(c)

FIG.8